# EUROPEAN PATENT APPLICATION

(11) **EP 1 260 739 A2**
(43) Date of publication of application: **27.11.2002**
(21) Application number: 02011180.3
(22) Date of filing: 21.05.2002
(51) Int. Cl.: F16H 61/20

(54) **Automatic engine stop-start system**

(30) Priority: 21.05.2001 JP 2001150846; 21.12.2001 JP 2001389831
(71) Applicant: Denso Corporation, Kariya-city, Aichi-pref., 448-8661 (JP)
(72) Inventor: Tanaka, Naoki, Kariya-city, Aichi-pref., 448-8661 (JP); Abe, Tetsuya, Kariya-city, Aichi-pref., 448-8661 (JP); Kato, Akira, Kariya-city, Aichi-pref., 448-8661 (JP)
(74) Representative: Kuhnen & Wacker

(57) **Abstract**

An automatic engine stop-start system is applied to a vehicle engine (1) that is equipped with an automatic transmission (7). The automatic transmission (7) has a mechanical pump (9) driven by an engine (1), and an electromagnetic valve (23) for opening and closing a fluid path (21). The automatic transmission (7) further has a motor pump (17) for supplying pressurized fluid when the engine is automatically stopped, and a check valve 19 for preventing back flow to the motor pump 17. A controller (3) controls the valve (23) and the motor pump (17) so as to cut the fluid path (21) before the controller (3) automatically stops the engine (1).

## Description

### Description

The present invention relates to an automatic engine stop-start system for saving fuel and improving exhaust emission. Particularly, the present invention relates to an automatic engine stop-start system for a vehicular engine combined with a hydraulic type automatic transmission.

JP-A-11-132321 discloses a conventional arrangement of the automatic engine stop-start system. In this system, a motor driven pump or the like is provided for supplying pressurized fluid to a hydraulic device such as a hydraulic type automatic transmission when an engine is stopped. This arrangement is effective to prevent a shock caused by a sudden rise of pressure when the engine is restarted.

According to the above-described system, a belt type automatic transmission is used in the embodiment. The motor driven pump supplies pressurized fluid to a chamber of an output pulley when the engine is stopped. Further, a switching valve is disposed on an oil path connecting a mechanical type pump driven by the engine and the chamber of the output pulley.

However, the above-described conventional technology has a problem described below and further improvement has been desired. Since the switching valve is of a mechanical type, and response is slow, the pressure may be decreased during an operation of the switching valve. This may cause a shock when the engine is restarted. Further, since a planetary gear type automatic transmission has a smaller volume on a chamber for controlling a clutch, the pressure thereof may be significantly decreased. Further, when a fluid temperature is low, the fluid supply by the pump may delay, and may causes a long time low pressure. Additionally, in a low temperature, increased viscosity of the fluid increases a load of the pump and power consumption.

The invention has been carried out in view of the above-described problems and it is an object thereof to provide an automatic engine stop-start system capable of reducing transmission shock in restarting the engine.

According to the first aspect of the present invention, an automatic engine stop-start system for automatically stopping the engine when a predetermined condition is established, is used in a vehicle having a hydraulic (for example, oil pressure) type automatic transmission. The system comprises first supplying means driven by the engine (for example, mechanical type pump) for supplying pressurized fluid to a friction engagement element (for example, clutch or brake) of the automatic transmission, an electromagnetic valve arranged between the first supplying means and the friction engagement element for opening and closing a fluid path thereof and second supplying means (for example, motor pump) connected to the friction engagement element and capable of supplying the pressurized fluid to the friction engagement element when the engine is stopped. Further, the electromagnetic valve is closed so as to cut the fluid path before an engine stop command is outputted, the fluid pressure in the friction engagement element is prevented from being lower than a necessary pressure.

According to the invention, if the engine is automatically stopped and thereafter restarted, the transmission shock can be prevented. In the invention, the electromagnetic valve cuts the fluid circuit swiftly before outputting the engine stop command, that is, before the pressure is lowered in accordance with automatically stopping the engine. Thereby, the necessary pressure can be maintained, and the transmission shock caused by an abrupt increase of the fluid pressure can be prevented. Further, in case of applying the invention to a planetary gear type automatic transmission, the transmission shock can preferably be prevented.

Further, according to the invention, it is possible to prevent the transmission shock and to reduce the pump load at low temperature.

The pressurized fluid may be supplied to the friction engagement element by the second supplying means before the engine stop command is outputted. According to the invention, for example, a motor pump before the fluid pressure is lowered by automatically stopping the engine, the fluid pressure of the starting clutch is maintained such that the fluid pressure does not become lower than a necessary pressure. Therefore, in restarting the engine later, the transmission shock by the abrupt increase in the fluid pressure is not caused.

A check valve of preventing a fluid from flowing to the second supplying means may be arranged between the second supplying means and the friction engagement element. By operating the second supplying means, the pressurized fluid can be supplied to the friction engagement element via the check valve. Further, when the check valve stops the fluid flow, the pressurized fluid is prevented from leaking from the friction engagement element to the second supplying means and the necessary fluid pressure can be maintained.

A plurality of friction engagement elements, and a hydraulic control device (for example, fluid delivery control unit) for switching a state of supplying pressurized fluid to the respective friction engagement elements may be provided. The electromagnetic valve is arranged between one kind of the plurality of friction engagement elements and the hydraulic control device. According to the invention, a state of supplying pressurized fluid to the friction engagement element can be controlled.

An engine automatic stopping means and an engine automatic starting means may be provided. The engine automatic stopping means stops the engine when an engine stopping condition (automatic stopping condition) regardless of operation of an ignition key is satisfied based on detection signals from sensors for detecting states of the engine and the vehicle. The engine automatic starting means restarts the engine when an engine starting condition (automatic starting condition) regardless of the operation of the ignition key is satisfied based on the detection signals from the sensors.

The electromagnetic valve and/or the second supplying means is determined to drive before determining the engine stopping condition and the electromagnetic valve and/or the second supplying means is driven based on a result of the determination. According to the invention, the electromagnetic valve and the second supplying means are determined to drive before determining automatic stopping of the engine. Thereby, the electromagnetic valve and the second supplying means can be driven before automatically stopping the engine. Therefore, the necessary pressure of, for example, the starting clutch can be ensured by driving the electromagnetic valve and, for example, the motor pump before fluid pressure of, for example, the starting clutch is lowered in accordance with stopping the engine and therefore, the transmission shock can be prevented.

The number of conditions for determining to stop the engine may be greater than the number of condition for determining to drive the electromagnetic valve and/or the second supplying means. According to the invention, a necessary pressure of, for example, the starting clutch can be ensured by driving the electromagnetic valve and/or the motor pump before fluid pressure of the starting clutch is lowered. Further, in determining to stop the engine, a result of determining to drive the electromagnetic valve and the second supplying means can be utilized and therefore, there is achieved an advantage of capable of reducing a processing for the determination.

A signal for driving the second supplying means may is generated after a predetermined standby time from generating a signal of driving the electromagnetic valve. According to the invention, after cutting the fluid circuit by the electromagnetic valve, the necessary pressure is supplied to, for example, the side of the starting clutch by driving the second supplying means and therefore, pressurized fluid is not supplied to other portion and a supplying efficiency is excellent. Therefore, energy for supplying pressurized fluid can be restrained to a minimum.

The standby time may be made variable in accordance with a temperature of the fluid of the automatic transmission, for example, an ATF temperature. When the temperature of the fluid is high, the fluidity of the fluid is high and therefore, when the engine is stopped, fluid pressure of, for example, the starting clutch is swiftly lowered. In contrast thereto, when the temperature of the fluid is low, the fluidity of the fluid is low and even when the engine is stopped, fluid pressure of, for example, the starting clutch is not lowered immediately. Therefore, when the temperature of the fluid is low, even when the electromagnetic valve and the second supplying means are driven after elapse of a time period to some degree, the necessary pressure of, for example, the starting clutch can sufficiently be ensured. Particularly, when the second supplying means is driven, a time period of driving the second supplying means can be reduced and therefore, consumption of energy can be restrained.

The standby time may be set to be short when the temperature of the fluid of the automatic transmission is high and set to be long when the temperature of the fluid is low. According to the invention, not only the necessary pressure can be ensured but also consumption of energy can be restrained. Further, the standby time can be set by referring to, for example, a map showing a relationship between the standby time and the temperature of the fluid, or by using a relationship or the like by which the standby time is changed linearly or in steps in accordance with the temperature of the fluid.

A state of operating the second supplying means may be determined in accordance with the fluid pressure in the friction engagement element of the automatic transmission. In the case in which the motor pump or the like is not operated after automatically stopping the engine, even when the electromagnetic valve is closed, fluid pressure tends to gradually lower. Therefore, when the engine is restarted in a state in which fluid pressure becomes lower than a predetermined value (necessary pressure), the transmission shock is caused. Hence, according to the invention, after automatically stopping the engine, fluid pressure in the friction engagement element is checked and when fluid pressure becomes lower than the necessary pressure, there is carried out control of making fluid pressure equal to or higher than the necessary pressure or the like by operating the second supplying means (for example, motor pump). Thereby, when the engine is restarted, the transmission shock can be prevented from causing.

The signal for driving the second supplying means may be generated in accordance with a magnitude of the fluid pressure in the friction engagement element after generating the signal of driving the electromagnetic valve. According to the invention, after cutting the fluid circuit by the electromagnetic valve, fluid pressure is checked and, for example, when the fluid pressure becomes lower than the necessary pressure, by driving the second supplying means, the necessary pressure is supplied to, for example, the side of the starting clutch and therefore, the efficiency of supplying the pressurized fluid is excellent. Therefore, energy for supplying pressurized fluid can be restrained to a minimum.

The second supplying means may be driven when the fluid pressure in the friction engagement element is lower than a predetermined threshold. According to the invention, the transmission shock can be reduced. The threshold may be a value capable of maintaining to engage the friction engagement element, for example, necessary pressure. A pressure sensor may be used for measuring the fluid pressure. According to the invention, fluid pressure can accurately be measured, and it is possible to changing the threshold readily. A pressure switch operated when the fluid pressure becomes equal to or lower than a predetermined value or equal to or higher than the predetermined value, may be used for measuring the fluid pressure. According to the invention, the constitution of the system can be simplified.

The state of operating the second supplying means is determined in accordance with the temperature of the fluid of the automatic transmission. As described above, the fluidity of the fluid differs by the temperature of the fluid. Therefore, according to the invention, for example, the starting clutch can be supplied the necessary pressure but also consumption of energy can be restrained.

A timing of operating the second supplying means may be set as follows: it is early when the temperature of the fluid of the automatic transmission is high; and it is late when the temperature of the fluid is low. According to the invention, not only the necessary pressure of, for example, the starting clutch can be ensured but also consumption of energy can be restrained. The timing of operation (timing of starting operation) can be set by looking up a map that is determined between, for example, the timing of operation and the temperature of the fluid. A functional formula that obtains the timing of operation in accordance with the temperature of the fluid in a linear or step manner can be used.

The friction engagement element may be a starting clutch.

The second supplying means may be an electric type pump capable of supplying the pressurized fluid to the friction engagement element regardless of a state of operating the engine.

The electrically driven type pump (for example, motor pump) can be controlled by a duty control. According to the invention, it is possible to reduce consumption of energy.

Further, the electromagnetic valve may have a very small flow path in a closing state. Further, the second supplying means may include an accumulator, for example, a combination of the accumulator and the motor pump can be used.

Features and advantages of embodiments will be appreciated, as well as methods of operation and the function of the related parts, from a study of the following detailed description, the appended claims, and the drawings, all of which form a part of this application. In the drawings:
Fig. 1 is a block diagram showing a vehicular drive train control system including an automatic engine stop-start system according to a first embodiment of the present invention;
Fig. 2 is a block diagram showing a controller for the automatic engine stop-start system according to the first embodiment of the present invention;
Fig. 3 is a flowchart of the automatic engine stop-start system according to the first embodiment of the present invention;
Fig. 4 is a graph showing operation of the automatic engine stop-start system according to the first embodiment of the present invention;
Fig. 5 is a flowchart of the automatic engine stop-start system according to a second embodiment of the present invention;
Fig. 6 is a graph showing operation of the automatic engine stop-start system according to the second embodiment of the present invention;
Fig. 7 is a flowchart of the automatic engine stop-start system according to a third embodiment of the present invention;
Fig. 8 is a graph showing operation of the automatic engine stop-start system according to the third embodiment of the present invention;
Fig. 9 is a flowchart of the automatic engine stop-start system according to a fourth embodiment of the present invention;
Fig. 10 is a graph showing operation of the automatic engine stop-start system according to the fourth embodiment of the present invention;
Fig. 11 is a block diagram showing a vehicular drive train control system including an automatic engine stop-start system according to a fifth embodiment of the present invention;
Fig. 12 is a flowchart of the automatic engine stop-start system according to the fifth embodiment of the present invention; and
Fig. 13 is a graph showing operation of the automatic engine stop-start system according to the fifth embodiment of the present invention.

A detailed explanation will be given of a preferred embodiment of an automatic engine stop-start system in reference to the drawings.

### (First Embodiment)

The automatic engine stop-start system of an engine according to a first embodiment is mounted to a vehicle for carrying out control of automatic stopping and starting of an engine. The vehicle is provided with a pressure control device of an automatic transmission (AT) for carrying out fluid pressure control in carrying out ordinary automatic shift. The automatic engine stop-start system is combined with the automatic transmission to provide a vehicle drive train control system.

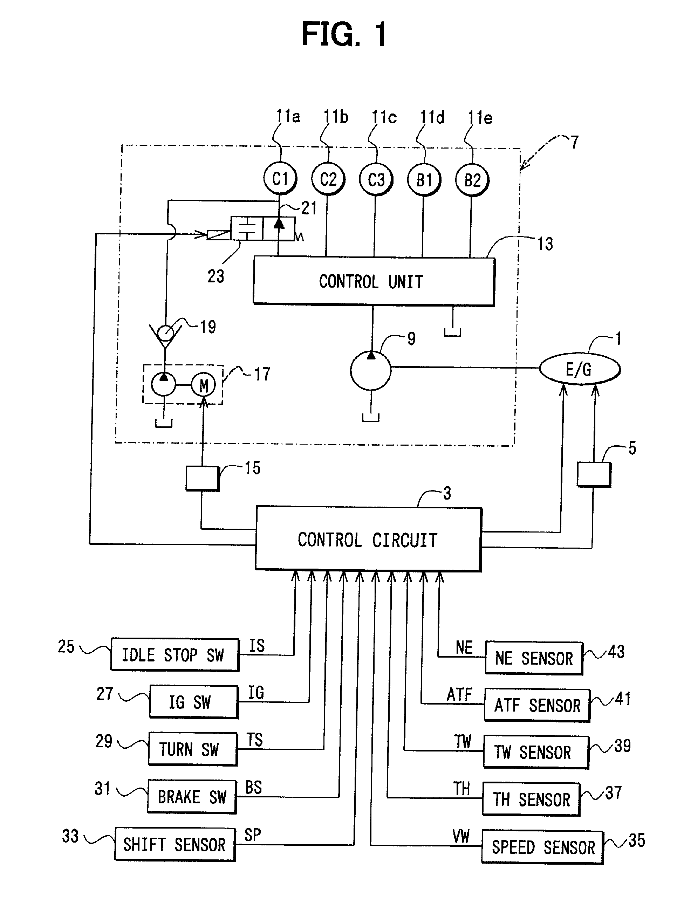

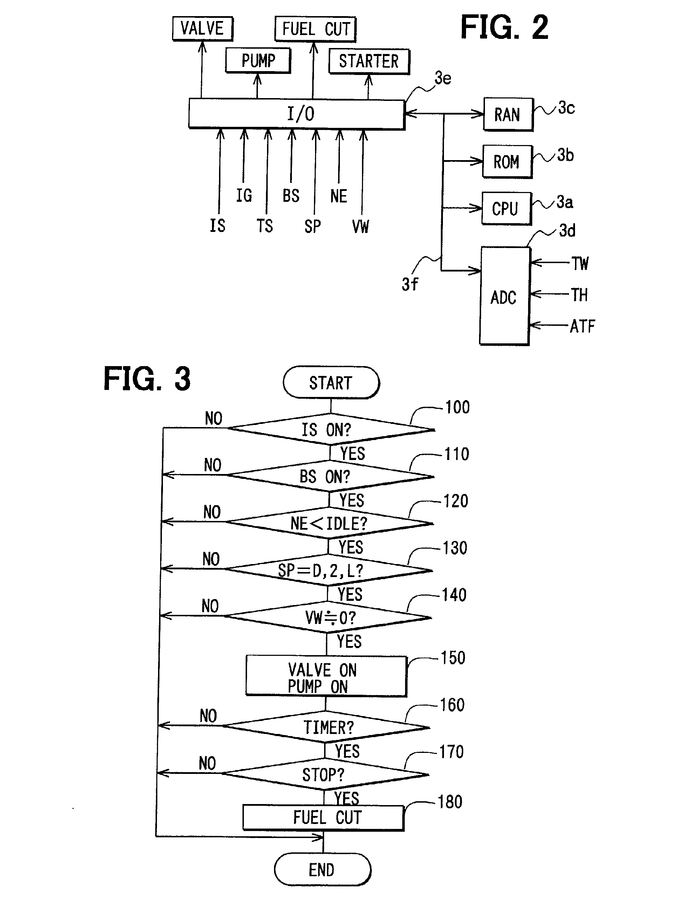

Fig. 1 is a system constitution view of the automatic engine stop-start system. Fig. 2 is a detailed explanatory view showing a controller (control circuit 3) along with respective signals.

As shown by Fig. 1, an engine 1 is constituted to be started by a starter (not illustrated) driven via a relay 5 and stopped by an injector (not illustrated) for cutting fuel by instruction from a control circuit 3.

A hydraulic automatic transmission 7 has a mechanical type pump 9 driven by the engine 1, clutches (C1 through C3) 11a through 11c, and brakes (B1, B2) 11d and 11e. The clutches and brakes provide friction engagement elements, respectively. The automatic transmission 7 has a hydraulic control unit 13 for switching to supply pressurized fluid to the clutches 11a through 11c and the brakes 11d and 11e by controlling pressurized fluid supplied from the mechanical type pump 9. The control unit 13 is controlled by an electric control unit. The automatic transmission 7 further has a motor pump 17 for supplying pressurized fluid. The motor pump 17 is energized via a relay 15. The relay 15 is controlled by the control circuit 3. A check valve 19 for preventing back flow to the motor pump 17 is provided on a discharge passage of the motor pump 17. An electromagnetic valve 23 for opening and closing a fluid path 21 is provided on the fluid path 21, and is driven by the control circuit 3.

The electromagnetic valve 23 is a normally opened valve arranged at the fluid path 21 between the hydraulic control unit 13 and the C1 clutch 11a (constituting starting clutch) for opening a circuit by urge force of a spring when electricity is not conducted and closing the circuit when electricity is conducted. The motor pump 23 is a pump a discharge (delivery) side of which is connected to the fluid path 21 between the electromagnetic valve 23 and the C1 clutch 11a and capable of supplying pressurized fluid to the C1 clutch 11a when the electromagnetic valve 23 is made ON. Further, the control circuit 3 is connected with an idling stop switch 25, an ignition switch 27, a turn switch 29, a brake lamp switch 31, a shift position sensor 33, a vehicle speed sensor 35, a throttle position sensor 37, a water temperature sensor 39, an ATF (Automatic Transmission Fluid) temperature sensor 41, and an engine revolution number sensor 43 and so on.

As shown by Fig. 2, the control circuit 3 is constituted by a microcomputer as a principal portion thereof. The control circuit 3 is constituted by CPU 3a for controlling various system, ROM 3b previously written with various numerical values and programs, RAM 3c written with operational procedures, numerical values and flags at predetermined regions, an A/D converter (ADC) 3d for converting an analog input signal into a digital signal, an input/output interface (I/O) 3e inputted and outputted with various kinds of digital signals and a bus line 3f by which the elements are connected.

The I/O 3e inputs an idling stop signal IS (signal indicating for or against automatic stopping of the engine) from the idling stop switch 25, an ignition signal IG from the ignition switch 27, and a turn signal TS (signal indicating a winking state of a turn signal lamp) from the turn switch 29. The I/O 3e further inputs a brake lamp signal BS from the brake lamp switch 31, a shift position signal SP (signal indicating a shift position of the automatic transmission) from the shift position sensor 33, and a vehicle speed signal VW from the vehicle speed sensor 35. The I/O 3e further inputs an engine revolution number signal NE from the engine revolution number sensor 43 and so on. The above-described idling stop switch 25 is a switch for permitting automatic stopping of the engine when the switch is made ON by a driver and not permitting automatic stopping of the engine when the switch is made OFF by the driver. The ADC 3d inputs a throttle position signal TH from the throttle position sensor 37, a water temperature signal TW (signal indicating water temperature of cooling water) from the water temperature sensor 39 and an ATF temperature signal ATF (signal indicating oil temperature of automatic transmission) from the ATF temperature sensor 41.

The CPU 3a executes various operations based on the input signals and outputs a fuel cut signal, a starter drive signal, a signal of driving the electromagnetic valve 23, a signal of driving the motor pump 17 and so on from the I/O 3e.

The mechanical type pump 9 generates pressurized fluid by being driven by the engine 1 and supplies pressurized fluid to a total of the automatic transmission 7 via the hydraulic control unit 13 when the engine 1 is operated.

Meanwhile, pressurized fluid is supplied only to a specific portion by the motor pump 17 in place of the mechanical type pump 7 when the engine 1 is stopped.

That is, the motor pump 17 does not substitute for the role of the mechanical type pump 9 as it is but supplies pressurized fluid only to a portion necessary for starting the vehicle, that is, the C1 clutch 11a constituting the starting cultch.

Therefore, according to the embodiment, pressurized fluid can be supplied to a side of the C1 clutch by arranging the electromagnetic valve 23 at the fluid path 21 for communicating the hydraulic control unit 13 and the C1 clutch 11a, connecting the delivery side of the motor pump 17 to the fluid path 21 on the side of the C1 clutch of the electromagnetic valve 23 and driving the motor pump 17 when the engine 1 is stopped.

By constructing such a constitution, leakage of pressurized fluid is much reduced and therefore, a small-sized one can be used as the motor pump 17.

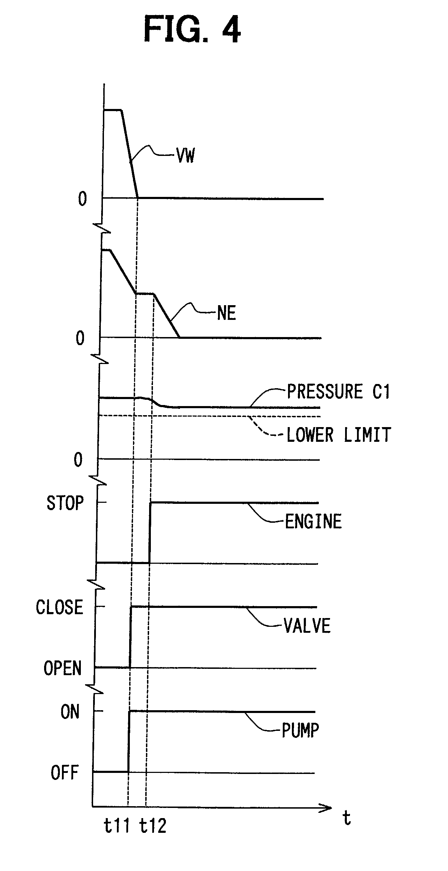

Fig. 3 is a flowchart showing a control process in the control circuit 3 of the embodiment. Fig. 4 is a graph showing signals in accordance with the control.

As shown by Fig. 3, at step 100, it is determined whether the idling stop switch 25 is made ON. At this step, when it is affirmatively determined, the operation proceeds to step 110, meanwhile, when it is negatively determined, the processing is temporarily finished without carrying out the processing of automatic stopping of the engine thereafter since one of conditions of the automatic stopping of the engine is not satisfied.

At step 110, it is determined whether the brake lamp switch 27 is made ON. At this step, when it is affirmatively determined, the operation proceeds to step 120, meanwhile, when it is negatively determined, the processing is temporarily finished similar to the above-described.

At step 120, based on the engine revolution number signal, it is determined whether the engine revolution number is equal to or smaller than a previously determined idling revolution number. At this step, when it is affirmatively determined, the operation proceeds to step 130, meanwhile, when it is negatively determined, the processing is temporarily finished similar to the above-described.

At step 130, based on the shift position signal, it is determined whether the shift position of the automatic transmission 7 is any of 'D', '2' and 'L'. At this step, when it is affirmatively determined, the operation proceeds to step 140, meanwhile, when it is negatively determined, the operation is temporarily finished similar to the above-described.

At step 140, based on the vehicle speed signal, it is determined whether the vehicle speed is substantially 0, in details, whether the vehicle speed is equal to or smaller than, for example, 2 through 3 km/h. At this step, when it is affirmatively determined, the operation proceeds to step 150, meanwhile, when it is negatively determined, the processing is temporarily finished similar to the above-descried.

At step 150, the conditions with regard to the steps 100 through 140, that is, the conditions of driving the electromagnetic valve 23 and the motor pump 17 constituting portions of the conditions of automatic stopping of the engine, are satisfied and therefore, the signal of driving the electromagnetic valve 23 and the signal of driving the motor pump 17 are respectively outputted to the electromagnetic valve 23 and the motor pump 17. Thereby, the electromagnetic valve 23 is made ON, the fluid path 21 is cut, the motor pump 17 is made ON and pressurized fluid is supplied to the C1 clutch 11a via the check valve 19.

At successive step 160, it is determined whether a predetermined time period elapses when the vehicle speed has substantially become 0. At this step, when it is affirmatively determined, the operation proceeds to step 170, meanwhile, when it is negatively determined, the processing is temporarily finished.

At step 170, it is determined whether other conditions for automatically stopping the engine 1 are satisfied. At this step, when it is affirmatively determined, the operation proceeds to step 180, meanwhile, when it is negatively determined, the processing is temporarily finished.

The other conditions for automatically stopping the engine 1 are, for example, that the turn signal is not outputted, that water temperature is equal to or higher than a predetermined value, that the ATF temperature is equal to or higher than a predetermined value and so on.

At step 180, since the above-described conditions of steps 100 though 140, 160 and 170 have been satisfied, that is, all the conditions for automatically stopping the engine 1 have been satisfied, the fuel cut signal is outputted from I/O 3e to the injector, thereby, by preventing fuel from being injected from the injector, the engine 1 is stopped and the processing is temporarily finished.

In an example of an operation, a vehicle automatically stops the engine 1 at a crossroads or the like. As shown by Fig. 4, when the vehicle is decelerated by braking, at time t11, the vehicle speed becomes 0 and vehicle is stopped. At the time t11, there are satisfied the above-described condition of driving the electromagnetic valve 23 and the above-described condition of driving the motor pump 17 such as a reduction in the engine revolution number and therefore, the electromagnetic valve 23 is made ON, the fluid path 21 is cut, the motor pump 17 is made ON and supply of pressurized fluid to the C1 clutch 11a is started. That is, by the electromagnetic valve 23, there is cut the fluid path 21 to the hydraulic control unit 13 at which supply of pressurized fluid by the mechanical type pump 9 is stopped (therefore, side of the atmospheric pressure) and therefore, supply of pressurized fluid only to the C1 clutch 11a can be carried out by the motor pump 17. Thereafter, at time t12 after elapse of a predetermined time period from the time t11, stopping of engine is carried out. Further, at this occasion, the operation is at standby for the predetermined time period for reducing shock or the like by abrupt change of the state.

In the embodiment, the electromagnetic valve 23 is arranged between the hydraulic control unit 13 and the C1 clutch 11a. The delivery side of the motor pump 17 is connected between the electromagnetic valve 23 and the C1 clutch 11a. When the engine 1 is automatically stopped, before determining to automatically stop the engine 1, the electromagnetic valve 23 is made ON, the fluid path 21 is cut and the motor pump 17 is made ON and pressurized fluid is supplied to the C1 clutch 11a. Thereby, pressurized fluid supplied to the C1 clutch 11a is not interrupted during a time period of switching from the mechanical type pump 9 to the motor pump 17 and therefore, fluid pressure of the C1 clutch 11a does not become lower than necessary pressure.

Therefore, there is achieved a significant effect of capable of preventing the transmission shock even when the engine 1 is automatically restarted at any timing, further, even when a volume at inside of a cylinder chamber of the C1 clutch 11a is small.

Further, the above-described necessary pressure indicates pressure capable of maintaining to engage the C1 clutch 11a, that is, pressure at which the transmission shock is not caused when the engine 1 is restarted.

Further, pressurized fluid by the motor pump 17 may be supplied not to a total of the transmission but only to a portion of the friction engaging elements (for example, the C1 clutch 11a) and therefore, there is achieved an advantage of capable of using a small-sized one for the motor pump 17.

Further, according to the embodiment, even when the fluid is at low temperatures, the fluid path 21 is swiftly cut by the electromagnetic valve 23 and therefore, even when there is assumedly a delay in response in the output of the motor pump 17, a reduction of pressure is not caused and therefore, the transmission shock at low temperatures can also be prevented.

Furthermore, although when the fluid is at low temperatures, the pump load is increased, according to the embodiment, the pressure reduction is prevented by cutting the fluid path 21 swiftly by the electromagnetic valve 23 and therefore, the pump load can be reduced.

Further, since the check valve 19 is arranged on the delivery side of the motor pump 17, even when operation of the motor pump 17 is assumedly stopped, pressure of the C1 clutch is not reduced.

### (Second Embodiment)

Although a basic constitution of an automatic engine stop-start system according to the embodiment is similar to that of the first embodiment, a control processing thereof differs therefrom. Explanations about the same or equivalent portions already explained are not repeated in the following embodiments.

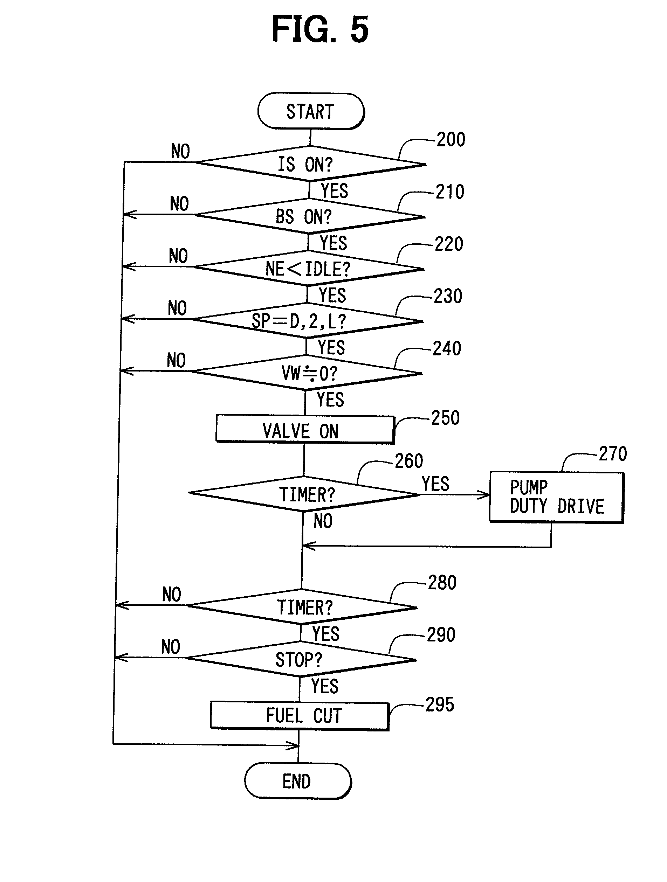

As shown by Fig. 5, steps 200 through 240 are similar to the steps 100 through 140 of the first embodiment, described above. When all of the above-described conditions are affirmatively determined, the operation proceeds to step 250, meanwhile, when any of the conditions are negatively determined, the processing is temporarily finished. At step 250, the signal of driving the electromagnetic valve 23 is outputted. Thereby, the electromagnetic valve 23 is made ON and the fluid path 21 is cut.

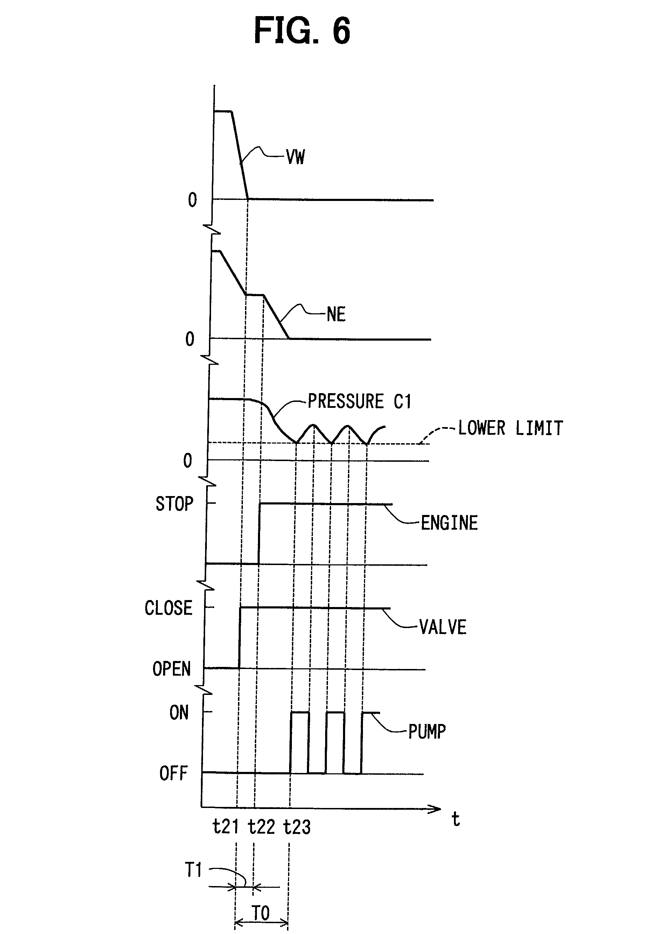

At successive step 260, it is determined whether a predetermined time period T0 (t23-t21: refer to Fig. 6) has elapsed after outputting the drive signal of the electromagnetic valve 23. At this step, when it is affirmatively determined, the operation proceeds to step 270, meanwhile, when it is negatively determined, the operation proceeds to step 280.

Further, when it is negatively determined at step 260, the condition of driving the motor pump 17 is not satisfied and therefore, the operation proceeds to step 280 as it is without driving the motor pump 17.

At step 270, the conditions with regard to steps 200 through 240 and 260, that is, the conditions of driving the motor pump 17 are satisfied and therefore, the signal of driving the motor pump 17 (in this case, Duty signal) is outputted. Thereby, the motor pump 17 is made ON (in a state in which the electromagnetic valve is made ON) and pressurized fluid is applied to the C1 clutch 11a.

Thereafter, at step 280, it is determined whether a predetermined time period T1 (t22-t21: refer to Fig.6) is elapsed when the vehicle speed has substantially become 0 regardless of a result of determination at step 260, described above. At this step, when it is affirmatively determined, the operation proceeds to step 290, meanwhile, when it is negatively determined, the processing is temporarily finished.

At step 290, it is determined whether other conditions similar to those of Embodiment 1, described above, for automatically stopping the engine 1, are satisfied. At this step, when it is affirmatively determined, the operation proceeds to step 295, meanwhile, when it is negatively determined, the processing is temporarily finished.

At step 295, the above-described conditions of steps 200 through 240, 280 and 290 are satisfied, that is, all of the conditions for automatically stopping the engine 1 are satisfied and therefore, the fuel cut signal is outputted to the injector, the engine 1 is stopped and the processing is temporarily finished.

As shown by Fig. 6, when the vehicle is decelerated by braking, at time t21, the vehicle speed becomes 0 and the vehicle is stopped. At time t21, the above-described conditions of driving the electromagnetic valve 23 are satisfied and therefore, the electromagnetic valve 23 is made ON, the fluid path 21 is cut and fluid pressure of the C1 clutch 11a is maintained. Thereafter, after elapse of the predetermined time period T1 (t22-21) from time t21, the engine 1 is stopped. After the engine 1 has been stopped, there is not supplied pressurized fluid from the mechanical type pump 9 and therefore, fluid pressure of the C1 clutch is gradually lowered. Further, after elapse of the predetermined time period T0 (t23-t21)from time t21, the motor pump 17 is driven and pressurized fluid is supplied to the C1 clutch 11a to thereby elevate the pressure of the C1 clutch. Thereafter, the signal of driving the motor pump 17 is controlled by a duty ratio and ON/OFF of the motor pump 17 are repeated.

According to the embodiment, the electromagnetic valve 23 is made ON and after elapse of the predetermined time period (standby time period) T0, the motor pump 17 is driven by the duty ratio control. Further, the above-described predetermined time period T0 is set such that the pressure of the C1 clutch does not become lower than the necessary pressure in accordance with the ATF temperature and also the duty ratio of the signal of driving the motor pump 17 is set such that pressure of the C1 clutch does not become lower than the necessary pressure. Therefore, when the engine 1 is automatically stopped, fluid pressure of the C1 clutch 11a does not become lower than the necessary pressure and therefore, even when the engine 1 is automatically restarted at any timing, the transmission shock is not caused.

Further, when the electromagnetic valve 23 is made ON, a rate of reducing fluid pressure is reduced and therefore, according to the embodiment, the motor pump 17 may be driven after the predetermined standby time since the electromagnetic valve 23 has been made ON. Therefore, a time period of driving the motor pump 17 can be reduced and therefore, drive energy and power consumption can be reduced.

Further, the lower the ATF temperature, the higher the ATF viscosity becomes and therefore, the lower the ATF temperature, the longer the predetermined time period T0 can be set. That is, when the electromagnetic valve 23 is temporarily made ON, the rate of reducing fluid pressure is significantly reduced and therefore, the lower the ATF temperature by which starting of the motor pump 17 is retarded, the longer the predetermined time period T0 can be set. Therefore, the motor pump 17 can be operated at a necessary timing and drive energy of the motor pump 17 can be reduced.

Furthermore, since the motor pump 17 is driven by the duty ratio control and therefore, there is achieved an advantage of capable of reducing drive energy.

### (Third Embodiment)

In a third embodiment, a control process differs from the first embodiment.

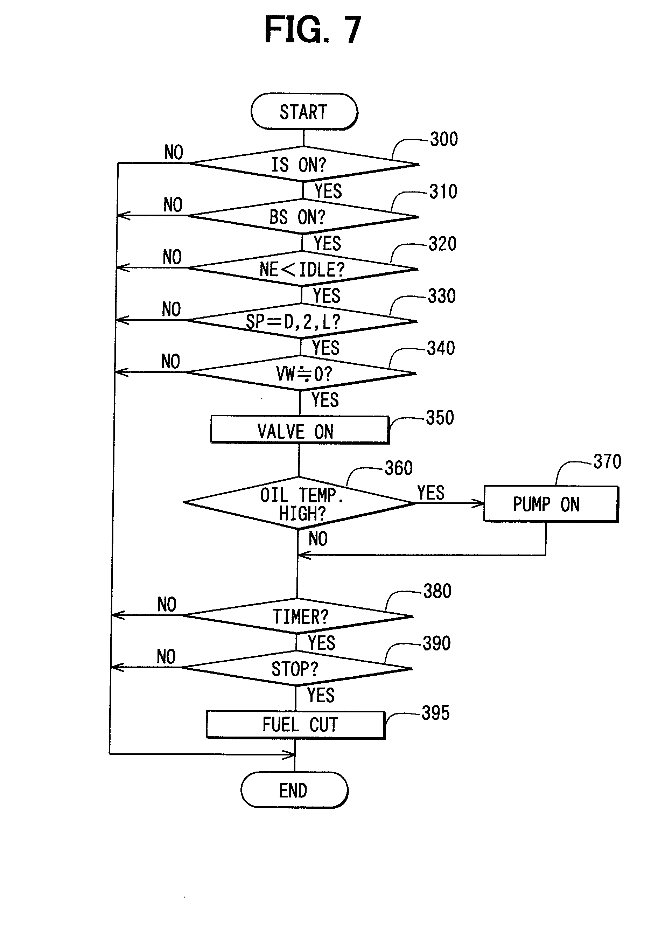

As shown by Fig. 7, processings of steps 300 through 340 are similar to those of the first embodiment. When all of the conditions are affirmatively determined, the operation proceeds to step 350, meanwhile, when any of the conditions are negatively determined, the processing is temporarily finished. At step 350, the signal of driving the electromagnetic valve 23 is outputted. Thereby, the electromagnetic valve 23 is made ON and the fluid path 21 is cut.

At successive step 360, it is determined whether the fluid temperature (ATF temperature) is equal to or higher than predetermined temperature "a"°C after outputting the signal of driving the electromagnetic valve 23. At this step, when it is affirmatively determined, the operation proceeds to step 370, meanwhile, when it is negatively determined, the operation proceeds to step 380. Further, when it is negatively determined at step 360, the condition of driving the motor pump 17 is not satisfied and therefore, the motor pump 17 is not driven and the operation proceeds to step 380 as it is.

At step 370, the conditions with regard to the above-described steps 300 through 340 and 360, that is, the conditions of driving the motor pump 17 are satisfied and therefore, the signal of driving the motor pump 17 is outputted. Thereby, the motor pump 17 is made ON (in the state in which the electromagnetic valve 23 is made ON) and pressurized fluid is supplied to the C1 clutch 11a.

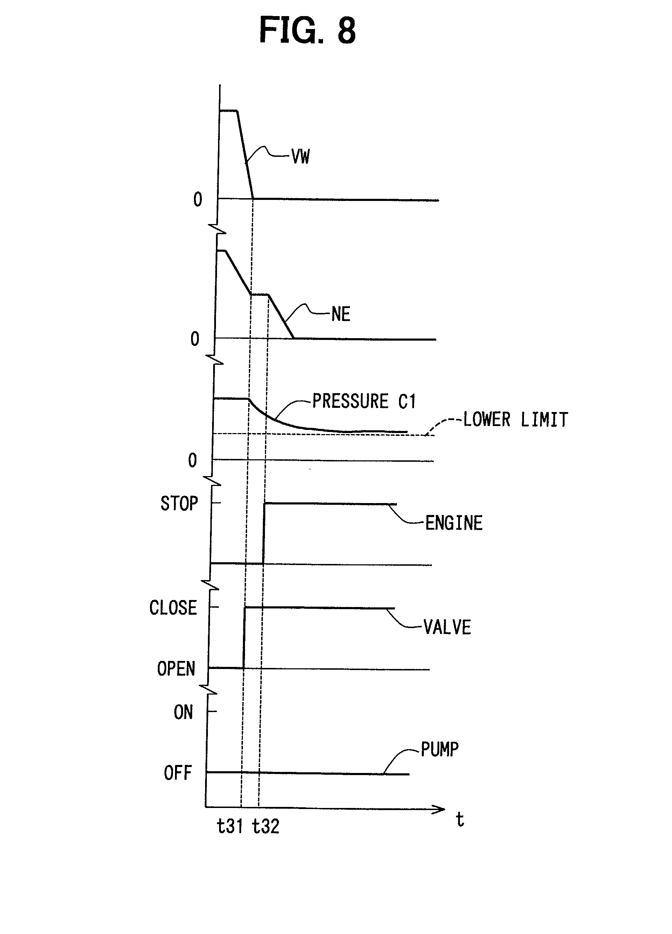

Thereafter, at step 380, regardless of a result of determination of the above-described step 360, it is determined whether a predetermined time period T1 (t32-t31: refer to Fig. 8) elapses since the vehicle speed has become substantially 0. At this step, when it is affirmatively determined, the operation proceeds to step 390, meanwhile, when it is negatively determined, the operation is temporarily finished.

At step 390, it is determined whether other conditions similar to those of Embodiment 1, described above, for automatically stopping the engine 1, are satisfied. At this step, when it is affirmatively determined, the operation proceeds to step 395, meanwhile, when it is negatively determined, the operation is temporarily finished.

At step 395, since the conditions of the above-described steps 300 through 340, 380 and 390 are satisfied, that is, since all of the conditions for automatically stopping the engine 1 are satisfied, the fuel cut signal is outputted to the injector, the engine 1 is stopped and the processing is temporarily finished.

As shown by Fig. 8, when the vehicle is decelerated by braking, at time t31, the vehicle speed becomes 0 and the vehicle is stopped. At time t31, the above-described conditions of driving the electromagnetic valve 23 are satisfied and therefore, the electromagnetic valve 23 is made ON, the fluid path 21 is cut and fluid pressure of the C1 clutch 11a is maintained. Thereafter, after elapse of the predetermined time period T1 (t32-t31) from time t31, the engine 1 is stopped. After stopping the engine 1, there is not supply of pressurized fluid from the mechanical type pump 9 and therefore, fluid pressure of the C1 clutch is gradually lowered. However, when the fluid temperature is equal to or lower than "a"°C, fluid pressure of the C1 clutch 11a is not lowered from the necessary pressure and therefore, over a long period of time, certain constant fluid pressure can be maintained. Thereafter, ON/OFF of the motor pump 17 are repeated at pertinent intervals such that fluid pressure of the C1 clutch 11a is not lowered from the necessary pressure.

According to the Embodiment, when the engine is automatically stopped, the electromagnetic valve 23 is made ON, after elapse of the predetermined time period T1, in the case in which the fluid temperature is equal to or lower than "a"°C, a state in which the motor pump 17 is not driven, is maintained. That is, when the fluid temperature is equal to or lower than "a"°C, fluid pressure of the C1 clutch 11a is not lowered from the necessary pressure and therefore, even when the motor pump 17 is not operated, certain constant fluid pressure can be maintained.

Therefore, when the engine 1 is automatically stopped, fluid pressure of the C1 clutch 11a does not become lower than the necessary pressure and therefore, even when the engine 1 is automatically restarted at any timing, the transmission shock is not caused. Further, when the ATF temperature is low, the motor pump 17 is not driven and therefore, there is achieved an advantage of capable of reducing drive energy.

### (Fourth Embodiment)

In a fourth embodiment, a control process differs from the first embodiment.

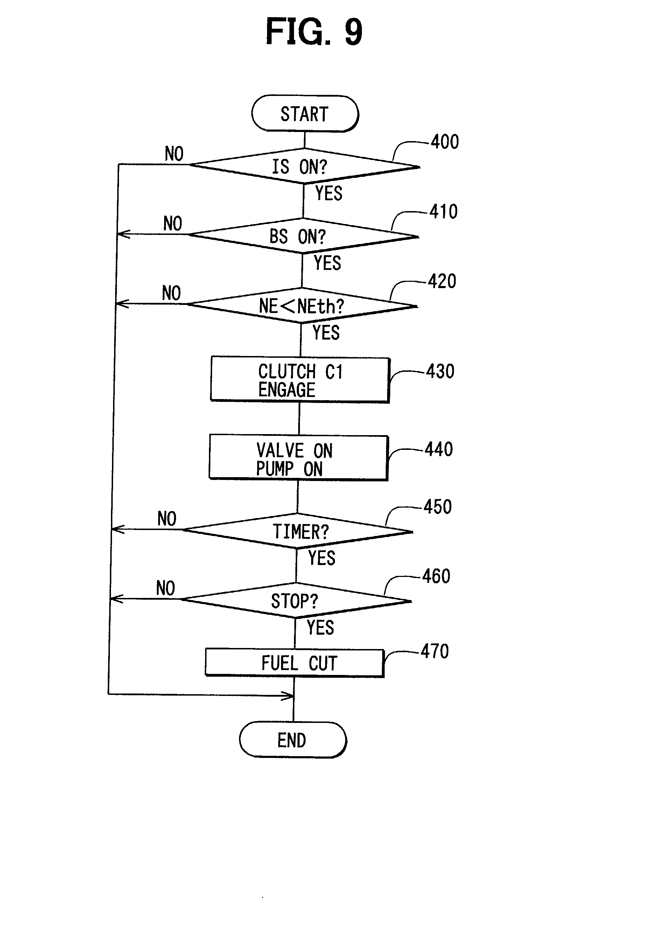

As shown by Fig. 9, processings at steps 400 and 410 are similar to those of the first embodiment. At step 420, it is determined whether the engine revolution number is equal to or smaller than the predetermined revolution number. For example, it is determined whether the engine revolution number is equal to or smaller than an engine revolution number in correspondence with the vehicle speed of 10 through 30 km/h. At the step, when it is affirmatively determined, the operation proceeds to step 430, meanwhile, when it is negatively determined, the operation is temporarily finished.

At step 430, the shift position of the automatic transmission 7 is set to a shift position at which the C1 clutch 11a is brought into an engaged state. Thereby, necessary pressurized fluid is ensured for the pressure of the C1 clutch.

At successive step 440, the signal of driving the electromagnetic valve 23 is outputted and the signal of driving the motor pump is outputted.

At successive step 450, it is determined whether a predetermined time period elapses after the signal of driving the motor pump 1 has been outputted. At this step, when it is affirmatively determined, the operation proceeds to step 460, meanwhile, when it is negatively determined, the processing is temporarily finished.

At step 460, it is determined whether other conditions similar to those of Embodiment 1, described above for automatically stopping the engine 1 are satisfied. At the step, when it is affirmatively determined, the operation proceeds to step 470, meanwhile, when it is negatively determined, the operation is temporarily finished.

At step 470, since the conditions of the above-described steps 400 through 420, 450 and 460 are satisfied, that is, since all of the conditions for automatically stopping the engine 1 are satisfied and therefore, the fuel cut signal is outputted to the injector, the engine 1 is stopped and the processing is temporarily finished.

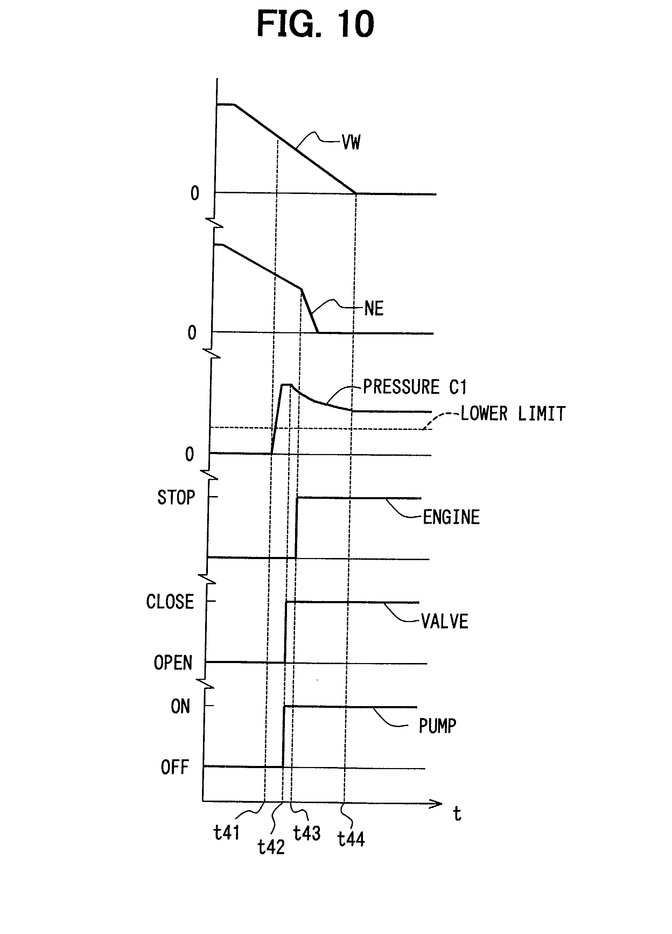

As shown by Fig. 10, when the vehicle is decelerated by braking, at time t44, the vehicle speed becomes 0 and the vehicle is stopped. At time t41 before reaching the time t44, that is, before the vehicle is stopped, the shift position is set to a shift position at which the C1 clutch 11a is brought into the engaged state and fluid pressure equal to or higher than the necessary pressure at the C1 clutch 11a in starting, is ensured. Thereafter, at time t42, the electromagnetic valve 23 and the motor pump 17 are driven to thereby maintain fluid pressure. Further, at time t43, the engine 1 is stopped by the engine stop signal and at time t44 thereafter, the vehicle speed becomes 0.

According to the embodiment, when the engine 1 is automatically stopped, in the case in which the brake is depressed and the vehicle speed is reduced, the pressure of the C1 clutch is ensured by setting the shift position to the shift position at which the C1 clutch 11a is brought into the engaged state, thereafter, the electromagnetic valve 23 and the motor pump 17 are driven to thereby maintain the state. Therefore, according to the embodiment, not only an effect similar to the first embodiment is achieved, but also the pressure of the C1 clutch is ensured before stopping the vehicle and therefore, the pressure of the C1 clutch can further firmly be ensured. Further, even when the engine 1 is stopped, in running the vehicle and the engine is restarted, the transmission shock is not caused.

### (Fifth Embodiment)

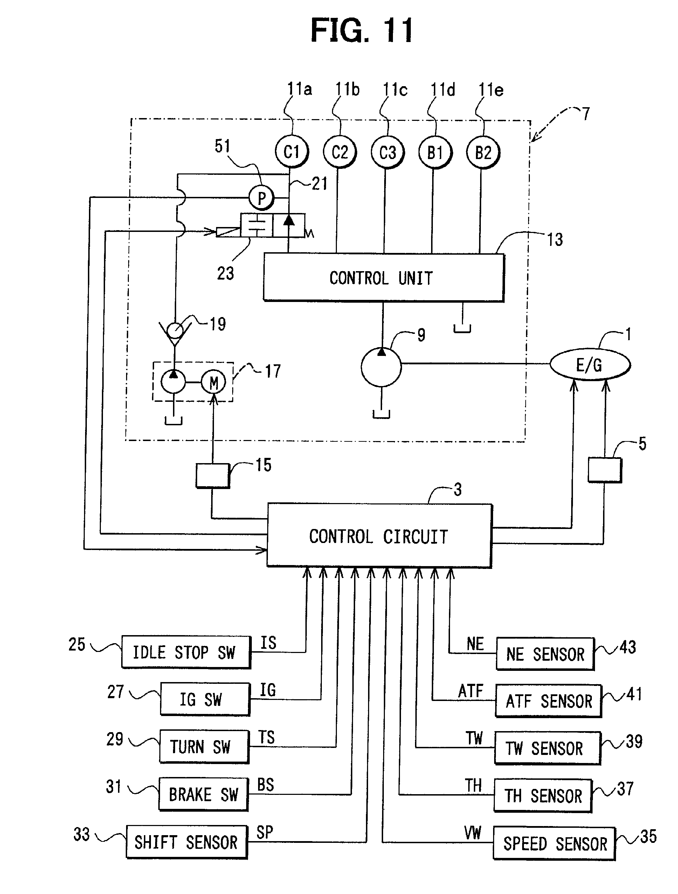

As shown in Fig. 11, a pressure sensor 51 is arranged for detecting pressure of the fluid path 21. That is, the pressure sensor 51 detects a fluid pressure of the starting clutch C1. The pressure sensor 51 outputs a signal indicative of the pressure detected to the control circuit 3.

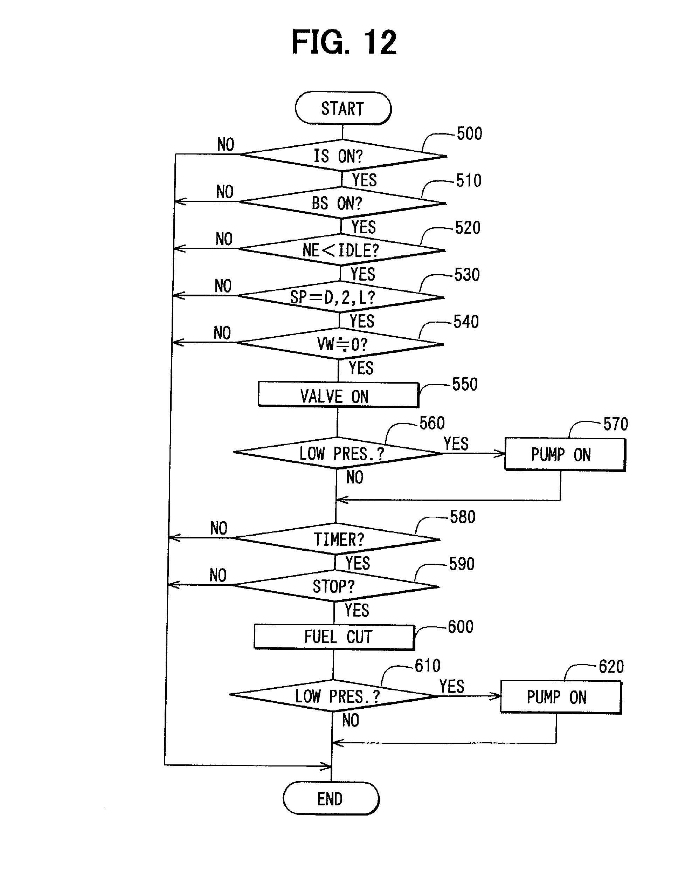

As shown by Fig. 12, steps 500 through 540 are similar to those of the first embodiment. When all of the above-described conditions are affirmatively determined, the operation proceeds to step 550, meanwhile, when any of the conditions are negatively determined, the processing is temporarily finished.

At step 550, the above-described conditions with regard to steps 500 through 540, that is, the conditions of driving the electromagnetic valve 23 are satisfied and therefore, the signal for driving the electromagnetic valve 23 is outputted. Thereby, the electromagnetic valve 23 is made ON and the fluid path 21 is cut.

At successive step 560, it is determined whether fluid pressure of the fluid path 21 (that is, fluid pressure at inside of the C1 clutch 11a) is less than predetermined pressure "a" (Pa) after outputting the signal of driving the electromagnetic valve 23. At the step, when it is affirmatively determined, the operation proceeds to step 570, meanwhile, when it is negatively determined, the operation proceeds to step 580. Further, when it is negatively determined at step 560, the condition of driving the motor pump 17 is not satisfied and therefore, the operation proceeds to step 580 as it is without driving the motor pump 17.

At step 570, the above-described conditions with regard to steps 500 though 540 and 560, that is, the conditions of driving the motor pump 17 are satisfied and therefore, the signal of driving the motor pump 17 is outputted. Thereby, the motor pump 17 is made ON (in the state in which the electromagnetic valve 23 is made ON) and pressurized fluid is supplied to the C1 clutch 11a.

Thereafter, at step 580, regardless of a result of determination of the above-described step 560, it is determined whether the predetermined time period T1 elapses after the vehicle speed has substantially become 0. At this step, when it is affirmatively determined, the operation proceeds to step 590, meanwhile, when it is negatively determined, the operation is temporarily finished.

At step 590, it is determined whether other conditions similar to those of Embodiment 1, described above, for automatically stopping the engine 1 are satisfied. At this step, when it is affirmatively determined, the operation proceeds to step 600, meanwhile, when it is negatively determined, the operation is temporarily finished.

At step 600, since the above-described conditions of steps 500 through 540, 580 and 590 are satisfied, that is, since all of the conditions for automatically stopping the engine 1 are satisfied, the fuel cut signal is outputted to the injector and the engine 1 is stopped.

Further, also during a time period in which the engine 1 is stopped, at step 610, similar to the above-described step 560, it is determined whether the fluid pressure at inside of the C1 clutch 11a is less than the predetermined pressure "a"Pa and when the pressure becomes less than the predetermined pressure "a"Pa, at step 620, the motor pump 17 is driven and the necessary pressure is supplied to the C1 clutch 11a.

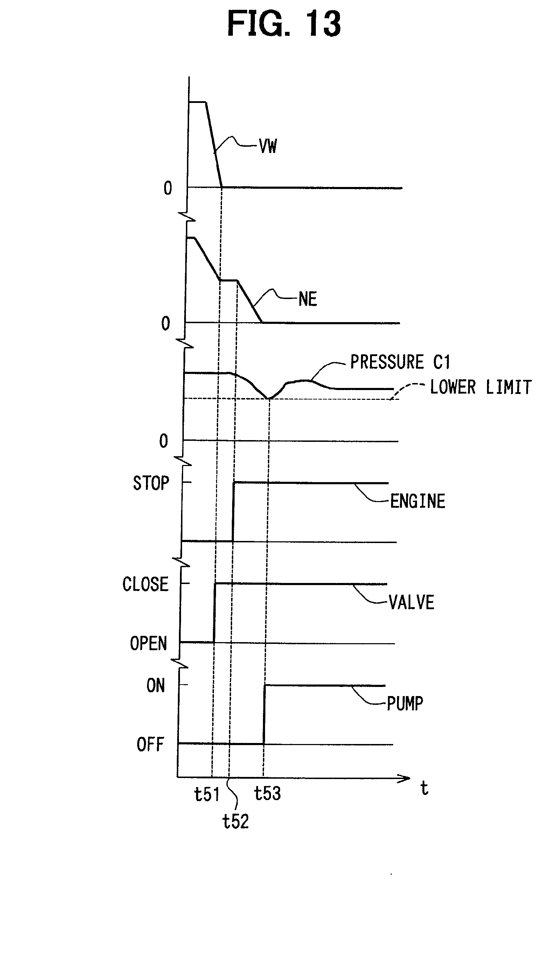

As shown by Fig. 13, when the vehicle is decelerated by braking, at time t51, the vehicle speed becomes 0 and the vehicle is stopped. Further, at time t51, when the above-described conditions of driving the electromagnetic valve 23 such as lowering of the engine revolution number are satisfied, the electromagnetic valve 23 is made ON and the fluid path 21 is cut. Thereafter, at time t52 after elapse of a predetermined time period from time t51, stopping of the engine is carried out. After stopping the engine, fluid pressure is gradually lowered and therefore, a change in the pressure of the C1 clutch at that occasion is measured by the pressure sensor 51. Further, at time t53, in the case in which the pressure of the C1 clutch is lowered from the necessary pressure (less than necessary pressure), when the above-described conditions of driving the motor pump 17 such as lowering of the engine revolution number are satisfied, the motor pump 17 is made ON and supply of fluid pressure to the C1 clutch 11a is started.

According to the embodiment, after the engine 1 is automatically stopped and the electromagnetic valve 23 is made ON, in the case in which the pressure of the C1 clutch is lowered from the necessary pressure, the motor pump 17 is driven to thereby ensure the necessary pressure. Therefore, not only an effect similar to the first embodiment is achieved, but also the pressure of the C1 clutch can further firmly be ensured, thereby, the transmission shock in restarting the engine 1 can firmly be prevented.

Further, when fluid pressure is lowered from the necessary pressure, the motor pump 17 is operated. Therefore, there is achieved an advantage that an efficiency of supplying pressurized fluid is excellent and energy for supplying pressurized fluid can be restrained to a minimum. That is, a time period for operating the motor pump 17 can be minimized and an amount of power consumption of a battery can significantly be restrained.

Further, in the case in which the viscosity of the fluid differs by, for example, temperature thereof, a rate of reducing fluid pressure is changed, however, even in such a case in which the condition is dispersed, there is achieved a significant effect that the motor pump 17 can be operated at a pertinent timing.

Further, in place of pressure sensor 51, there may be used a pressure switch which is operated (made ON) when fluid pressure becomes equal to or higher than a predetermined value. Therefore, in this case, a state in which the pressure switch is made OFF, signifies a state in which fluid pressure is lower than the necessary pressure. However, in the case of a pressure switch operated when fluid pressure becomes lower than the predetermined value, the pressure switch is operated contrary thereto.

Further, the invention is not limited to the above-described embodiments at all but can naturally be embodied in various modes thereof so far as the modes do not deviate from the technical range of the invention. For example, although according to the above- described embodiments, there is taken the example of the C1 clutch as the starting clutch, another clutch may be used as the starting clutch. Further, two or more of clutches will do and in that case, electromagnetic valves for the respective clutches are arranged at similar positions.

Although the present invention has been described in connection with the preferred embodiments thereof with reference to the accompanying drawings, it is to be noted that various changes and modifications will be apparent to those skilled in the art. Such changes and modifications are to be understood as being included within the scope of the present invention as defined in the appended claims.

## Claims

1. An automatic engine stop-start system used in a vehicle having a hydraulic type automatic transmission for automatically stopping the engine when a predetermined condition is established, said system comprising:
first supplying means (9) driven by the engine for supplying pressurized fluid to a friction engagement element of the automatic transmission;
an electromagnetic valve (23) arranged between the first supplying means and the friction engagement element for opening and closing a fluid path therebetween;
second supplying means (17) connected between the friction engagement element and the electromagnetic valve for supplying pressurized fluid to the friction engagement element when the engine is stopped; and
a controller (3) which controls the electromagnetic valve to cut the fluid path before an engine stop command is executed.

2. The automatic engine stop-start system according to claim 1, **characterized in that** the pressurized fluid is supplied to the friction engagement element (11a) by the second supplying means before the engine stop command is executed.

3. The automatic engine stop-start system according to claim 1 or 2, **characterized in that** a check valve (19) is arranged between the second supplying means and the friction engagement element, for preventing a fluid flow from the friction engagement element.

4. The automatic engine stop-start system according to any one of claims 1 thorough 3, **characterized in that** a hydraulic control device (13) for switching a state of supplying of the fluid to a plurality of friction engagement elements is provided between the first supplying means and the plurality of the friction engagement elements, wherein the electromagnetic valve is arranged between one kind of the plurality of the friction engagement elements and the hydraulic control device.

5. The automatic engine stop-start system according to any one of claims 1 though 4, **characterized in that** the controller comprises:
automatic engine stop means for stopping the engine when an engine stopping condition regardless of operation of an ignition key is satisfied based on detection signals from a plurality of sensors for detecting states of the engine and the vehicle; and
automatic engine start means for restarting the engine when an engine restarting condition regardless of the operation of the ignition key is satisfied based on the detection signals from the sensors.

6. The automatic engine stop-start system according to claim 5, **characterized in that** the controller (3) drives the electromagnetic valve and/or the second supplying means in response to a determination which is executed before determining the engine stopping condition.

7. The automatic engine stop-start system according to claim 5 or 6, **characterized in that** the number of conditions for determining to stop the engine is greater than the number of condition for determining to drive the electromagnetic valve and/or the second supplying means.

8. The automatic engine stop-start system according to any one of claims 1 though 7, **characterized in that** a signal for driving the second supplying means is generated after a predetermined standby time from generating a signal for driving the electromagnetic valve.

9. , The automatic engine stop-start system according to claim 8, **characterized in that** the standby time is made variable in accordance with a temperature of the fluid.

10. The automatic engine stop-start system according to claim 9, **characterized in that** the standby time is set to be short when the temperature of the fluid of the automatic transmission is high and set to be long when the temperature of the fluid is low.

11. The automatic engine stop-start system according to any one of claims 1 though 10, **characterized in that** a state of operating the second supplying means is determined in accordance with the fluid pressure in the friction engagement element of the automatic transmission.

12. The automatic engine stop-start system according to claim 11, **characterized in that** the signal for driving the second supplying means is generated in accordance with a magnitude of the fluid pressure in the friction engagement element after generating the signal for driving the electromagnetic valve.

13. The automatic engine stop-start system according to claim 12, **characterized in that** the second supplying means is driven when the fluid pressure in the friction engagement element is lower than a predetermined threshold.

14. The automatic engine stop-start system according to claim 13, **characterized in that** the threshold is a value capable of maintaining to engage the friction engagement element.

15. The automatic engine stop-start system according to any one of claims 11 through 14, **characterized in that** a pressure sensor is used for measuring the fluid pressure.

16. The automatic engine stop-start system according to any one of claims 11 through 14, **characterized in that** a pressure switch operated when the fluid pressure becomes equal to or lower than a predetermined value or equal to or higher than the predetermined value, is used for measuring the fluid pressure.

17. The automatic engine stop-start system according to any one of claims 1 through 16, **characterized in that** the state of operating the second supplying means is determined in accordance with the temperature of the fluid of the automatic transmission.

18. The automatic engine stop-start system according to claim 17, **characterized in that** when the temperature of the fluid of the automatic transmission is high, a timing of operating the second supplying means is set to be early and when the temperature of the fluid is low, the timing of operating the second supplying means is set to be late.

19. The automatic engine stop-start system according to any one of claims 1 through 18, **characterized in that** the friction engagement element is a starting clutch.

20. The automatic engine stop-start system according to any one of claims 1 through 19, **characterized in that** the second supplying means is an electric type pump capable of supplying the pressurized fluid to the side of the friction engagement element regardless of a state of operating the engine.

21. The automatic engine stop-start system according to claim 20, **characterized in that** the electric type pump is controlled by a duty control.
